# EUROPÄISCHE PATENTSCHRIFT

(11) **EP 4 609 335 B1**
(45) Veröffentlichungstag und Bekanntmachung des Hinweises auf die Patenterteilung: **21.10.2026**
(21) Anmeldenummer: 23828359.2
(22) Anmeldetag: 05.12.2023
(51) Int. Cl.: G06Q 10/067, G06Q 50/04

(54) **VERFAHREN ZUR HERSTELLUNG EINES PRODUKTES**
METHOD FOR THE MANUFACTURE OF A PRODUCT
PROCÉDÉ DE FABRICATION D'UN PRODUIT

(30) Priorität: 26.01.2023 EP 23153513
(43) Veröffentlichungstag der Anmeldung: 03.09.2025
(73) Patentinhaber: Siemens Aktiengesellschaft, 80333 München (DE)
(72) Erfinder: KAMPS, Tobias, 80538 München (DE); SCHUH, Carsten, 85598 Baldham (DE)
(74) Vertreter: Siemens Patent Attorneys
(86) Internationale Anmeldenummer: PCT/EP2023/084288
(87) Internationale Veröffentlichungsnummer: WO 2024/156410

(56) Entgegenhaltungen:
- EP-A1- 4 109 359
- WO-A1-2021/129922
- CN-A- 114 462 133
- MORTLOCK TRIER ET AL: "Graph Learning for Cognitive Digital Twins in Manufacturing Systems", IEEE TRANSACTIONS ON EMERGING TOPICS IN COMPUTING, IEEE, vol. 10, no. 1, 8 December 2021 (2021-12-08), pages 34 - 45, XP011901941, DOI: 10.1109/TETC.2021.3132251
- MARIO SCHMIDT: "Von der Material- und Energieflussanalyse zum Carbon Footprint - Anleihen aus der Kostenrechnung", CHEMIE INGENIEUR TECHNIK, WILEY VCH. VERLAG, WEINHEIM; DE, vol. 83, no. 10, 23 September 2011 (2011-09-23), pages 1541 - 1552, XP071107827, ISSN: 0009-286X, DOI: 10.1002/CITE.201100138
- CHIH-HSING CHU ET AL: "A Concurrent Approach to Reducing Environmental Impact of Product Development at the System Design Stage", IEEE TRANSACTIONS ON AUTOMATION SCIENCE AND ENGINEERING, IEEE SERVICE CENTER, NEW YORK, NY, US, vol. 9, no. 3, 1 July 2012 (2012-07-01), pages 482 - 495, XP011463483, ISSN: 1545-5955, DOI: 10.1109/TASE.2012.2194703

## Beschreibung

Die Erfindung betrifft ein Verfahren zur Herstellung eines Produktes nach Anspruch 1.

Zur Beurteilung eines Produktes hinsichtlich seines ökologischen Fußabdrucks wird die LCA-Methodik angewendet (Life Cycle Assessment), bei der entlang der Wertschöpfungskette beginnend mit den Ausgangsmaterialien über die Herstellung und Nutzung des daraus erzeugten Produktes bis hin zur Entsorgung eine Gesamtbetrachtung und Bilanzierung auf Basis vorher festgelegter messbarer Kriterien erfolgt (beispielsweise Energieverbrauch, CO₂-Freisetzung, Verbrauch seltener/edler/kritischer Materialien, Grundwasserbelastung).

Die Qualität und damit Aussagekraft einer solchen LCA hängt dabei u.a. sehr stark von den verfügbaren Daten entlang des Produktlebenszyklus ab. Gleichzeitig wird bis heute die LCA vornehmlich zur ökologischen (Gesamt-)Bewertung eines Produktes herangezogen (z.B. Eco-Label), aber bisher nicht in signifikantem Umfang zur interaktiven Optimierung des Produktdesigns oder der Produktionsabläufe.

Die WO 2021/129922 A1 offenbart ein Verfahren zum Betreiben eines Automatisierungssystems, welches wenigstens eine Produktionsanlage zum automatisierten Herstellen eines Produkts mit vorbestimmten Produkteigenschaften umfasst.

Der Erfindung liegt daher die Aufgabe zugrunde, ein Verfahren zur Herstellung eines Produktes bereitzustellen, bei der während des Produktionsprozesses technische Faktoren der gesamten ökologischen Bilanz eines Produktes berücksichtigt werden, die über die bekannten LCA-Daten hinausgehen, und damit der ökologische Fußabdruck des Produktes reduziert wird.

Die Lösung der Aufgabe besteht in einem Verfahren zur Herstellung eines Produktes mit den Merkmalen des Anspruchs 1. Dieses Verfahren zur Herstellung eines Produktes umfasst folgende Schritte:
- Erstellen einer digitalen Repräsentation des Produktes umfassend mindestens ein Simulationsmodell,
- Festlegen einer physikalischen Bewertungsgröße,
- Einbringen von Ausgangs-Designdaten und Ausgangs-Produktionsdaten des Produktes sowie Produktionsanlagendaten, die zusammen die Herstellungsdaten bilden, in die digitale Repräsentation,
- Einbringen von weiteren, alternativen Produktionsdaten und/oder Produktionsanlagendaten in die Repräsentation,
- Bereitstellen von Basisclustern aus einzelnen Herstellungsdaten, wobei die Summe aller Basiscluster die Herstellungsdaten ergibt,
   wobei das Basiscluster eine Wirk-Einheit im Herstellungsprozess, bezogen sowohl auf das Design des Produktes als auch auf alle Produktionsschritte unter Berücksichtigung der Produktionsmittel, ist, die für sich genommen einen Einfluss auf die Bewertungsgröße hat, und für die diese ermittelbar ist,
- Berechnung eines Wertes der Bewertungsgröße für jedes Basiscluster, wobei physikalische Informationen der Herstellungsdaten anhand eines in der Repräsentation abgelegten Äquivalenzmodells in die Bewertungsgröße umgerechnet werden,
- Berechnung von angepassten Herstellungsdaten mittels eines Optimierungsalgorithmus, mit dem die Summe der Bewertungsgrößen für alle Basiscluster als Zielfunktion so eingestellt wird, dass sie einem vorgegebenen Präferenzwert am nächsten kommt, wobei als Parameter die Herstellungsdaten, die alternativen Produktionsdaten und die alternativen Produktionsanlagendaten des Produktes variiert werden, und
- Herstellung eines zweiten Produktes unter Verwendung der angepassten Herstellungsdaten, das bezüglich der Bewertungsgröße optimiert ist.

Die vorliegende Erfindung gibt daher eine Lösung an, mit der auf Basis eines umfassenden Design- und Produktions-Systems mittels der Nutzung einer digitalen Repräsentation mit datengestützten Simulations-, Beurteilungs- und Entscheidungsalgorithmen ein adaptiver Regelkreis (offline-feedback) an der Schnittstelle zwischen Produktmanagement (z. B. CAD?) und Fertigungsplanung und -ablauf (Herstellungsdaten) eines Bauteils/Produktes etabliert werden kann, mit dem Ziel, mittels der in der Herstellungsphase des Produktes gewonnenen Realdaten (alternative Herstellungsdaten) eine zeitnahe und wissensbasierte Anpassung bzw. Optimierung des Produktionsablaufs sowie der zur Anwendung kommenden Maschinen, Prozesse und Materialien zu erreichen, und so den erforderlichen ökologischen Fußabdruck für die Herstellung des Bauteils/Produktes minimieren zu können. Somit entsteht durch die Einbindung der alternativen Herstellungsdaten ein anderes, bezüglich seines ökologischen Fußabdrucks optimiertes zweites Produkt.

Möglich wird dies dadurch, dass eine Vielzahl physikalischer Informationen, die zur Bewertung eines ökologischen Fußabdrucks ermittelt und herangezogen werden können, mittels eines Äquivalenzmodells in eine einheitliche Bewertungsgröße umgewandelt wird. Diese Bewertungsgröße kann bevorzugt die zur Herstellung eines Produktes benötigte Energie oder ein dabei entstehender CO₂-Ausstoß in Masse-Einheiten sein.

Im Zusammenspiel mit den anderen Komponenten des gesamten Produktions-Systems (bevorzugt auch LCA-Datenbank, CAD/CAM (Design/Produktionsdaten) und daraus abgeleiteter Bill of Materials und Bill of Production (BOM/BOP) des Produktes sowie dem Enterprise Resource Planning (ERP)-Systems der Fabrik, die Teil der Produktionsanlagendaten sind) wird dann mittels eines adaptiven Optimierungs-Regelkreises einer digitalen Repräsentation ein bestmöglicher Produktionsablauf unter Maximierung des Nachhaltigkeitsfaktors des Bauteils/ Produktes ermittelt, der u.a. auch Rücksicht nimmt auf das zu gewährleistende Pflichtenheft (Pflichtenheftdaten) des Produktes (Performanz, Lebensdauer etc.), die verfügbaren Ressourcen (Maschinen inkl. deren Fähigkeiten und Auslastung, Wartungszyklen, Werker etc.), also Produktionsdaten sowie Produktionsanlagendaten und alternative Produktionsdaten sowie alternative Produktionsanlagendaten, auf den Auftragsbestand inkl. Liefertermine sowie die spezifischen Materialverfügbarkeiten und -qualitäten. Die somit erzielte Optimierung kann einer entsprechenden Kostenoptimierung gegenübergestellt werden und eine zweite Entscheidungsgrundlage für Produkt- und Produktionsszenarien bieten.

Folgende Definitionen sind auf die die Ansprüche umfassenden Begriffe anzuwenden:
Allgemein vorteilhaft kann es sich bei dem Simulationsmodell um ein insbesondere multiphysikalisches Simulationsmodell handeln, bei welchem Phänomene aus mehreren physikalischen Domänen berücksichtigt werden. So können beispielsweise neben Effekten der strukturellen Mechanik auch thermische, fluiddynamische, chemische und/oder elektrische Zusammenhänge in dem Modell berücksichtigt sein. Durch ein solches multiphysikalisches Modell wird bewirkt, dass bei der Simulation die Zusammenhänge zwischen Ausgangs-Designdaten und Ausgangs-Produktionsdaten des Produktes sowie Produktionsanlagendaten, die zusammen die Herstellungsdaten bilden sowie von Life Cycle Assessment-Daten (LCA) ausreichend berücksichtigt werden. Mit anderen Worten handelt es sich um ein gekoppeltes Simulationsmodell. Dabei können vorteilhaft numerische Methoden zur Lösung von gekoppelten Differentialgleichungssystemen aus diesen verschiedenen physikalischen Domänen zum Einsatz kommen. Besonders vorteilhaft kann es sich dabei um Diskretisierungsmethoden handeln, beispielsweise um die Finite-Elemente-Methode, die Finite-Differenzen-Methode oder die Finite-Volumen-Methode.

Die digitale Repräsentation kann dabei als ein digitaler Zwilling eines Konstruktions- (Design-) und/oder Herstellungsprozesses sowie eines Nutzungsprozesses innerhalb des gesamten Lebenszyklus eines Produktes angesehen werden. Die digitale Repräsentation kann dabei Konstruktionsvorgänge umfassen, die beispielsweise durch ein CAD-System erfolgen (Teil der Ausgangs-Designdaten). Sie kann aber auch Fertigungssimulationen, die durch ein CAM-Verfahren erfolgen (Teil der Ausgangs-Produktionsdaten) sowie die physische Fertigung des Produktes an sich umfassen. Bei der physischen Fertigung werden dabei wiederum Prozessdaten wie Prozessüberwachungsdaten von Sensoren und ihre Auswertungen oder das Einspannen eines Bauteilträgers oder die Positionierung und Reihenfolge einzelner Teilbauteile beim Zusammenbau eines Produktes erhoben. Es werden aber auch Daten über die Verfügbarkeit von Anlagen und deren technischen Möglichkeiten in die digitale Repräsentation eingespeist (Teil der Produktionsanlagendaten).

Die digitale Repräsentation kann beispielsweise in Form eines Knowledge Graphs ausgestaltet sein, dieser dient dazu, Informationen zum Bauteil in semantische Relation zueinander zu setzen. Ein digitaler Zwilling im Allgemeinen wiederum ist eine digitale Repräsentation eines materiellen oder immateriellen Objekts oder Prozesses aus der realen Welt in der digitalen Welt. Digitale Zwillinge ermöglichen einen übergreifenden Datenaustausch. Sie sind dabei mehr als reine Daten und bestehen aus Modellen des repräsentierten Objekts oder Prozesses und können daneben Simulationen, Algorithmen und Services enthalten, die Eigenschaften oder Verhalten des repräsentierten Objekts oder Prozesses beschreiben, beeinflussen, oder Dienste darüber anbieten.

Semantische Relation: Hierunter sind u.a. örtliche Beziehungen, räumliche Beziehungen, beispielsweise zwischen einem Teil des Produktes während der Fertigung und einem Roboterarm, der zur Fertigung dient, zu verstehen. Ferner gehören Kausalitäten zu semantischen Relationen, wie beispielsweise die jeweilige Koordinatenbestimmung des Bauteils/Produktes bezüglich eines Koordinatensystems zum jeweiligen Prozesszeitpunktes oder die während eines bestimmten Prozesszeitpunktes eingebrachte Energiemenge. Ferner können Lebenszyklusinformationen und ihre Auswirkung auf die Produkteigenschaften nach einer gewissen Nutzungsdauer Bestandteil der semantischen Relation sein. Eine Mehrzahl an semantischen Relationen ergeben semantische Verknüpfungen, die wiederum ein semantisches Muster umfassen können.

Ausgangs-Designdaten und Ausgangs-Produktionsdaten sind die Daten, die über das Produkt aufgrund dessen Design, also der Konstruktion, und auf Basis der bekannten Produktionsanlagendaten vorliegen. Die Ausgangs-Designdaten und Ausgangs-Produktionsdaten basieren im Wesentlichen auf CAD (Computer Aided Design) oder CAM (Computer Aided Manufacturing) Daten, die in der digitalen Repräsentation hinterlegt werden. Zu den Designdaten gehören auch alle Informationen zu den Materialien, die für das Produkt verwendet werden. Die Designdaten umfassen also auch Materialdaten. Das bedeutet, dass die Designdaten z. B. Informationen umfassen, aus welchem Metall, beispielsweise Aluminium oder Stahl ein mechanisch beanspruchtes Teilbauteil des Produktes besteht. Dabei können zu den Materialdaten Informationen darüber vorliegen, welchen ökologischen Fußabdruck die verwendeten Materialien aufweisen.

Produktionsanlagendaten sind alle Daten, die über die Produktionsstätte bekannt sind. Sie umfassen zum Beispiel die verfügbaren Ressourcen (Maschinen inklusive deren Fähigkeiten und Auslastung, Wartungszyklen, aktueller Personalbestand zum Betreiben der Maschinen, sowie Werkzeuge, Betriebsmittel, Lagerbestand, Verbrauchsmaterial), den Auftragsbestand inklusive Lieferterminen und die spezifischen Materialverfügbarkeiten und -qualitäten. Alternative Produktionsdaten sind die Alternativen, die für eine Produktion zur Verfügung stehen. Diese können beispielsweise andere Maschinen, andere Ausgangsmaterialen oder andere Betriebsmittel sein.

Ferner umfasst die digitale Repräsentation in einer vorteilhaften Ausgestaltung bekannte Informationen zum Life Cycle Assessment (LCA) des Produktes, sofern sie technisch, physikalisch oder chemisch ausdrückbar sind. Zu diesen LCA-Informationen zählen unter anderem Werte entlang der Wertschöpfungskette, beginnend mit den Ausgangsmaterialien über die Herstellung und Nutzung des daraus erzeugten Produktes bis hin zur Entsorgung. Sie stellt eine Gesamtbetrachtung und Bilanzierung auf Basis vorher festgelegter messbarer Kriterien dar. Diese sind beispielsweise der Energieverbrauch, die CO₂-Freisetzung, der Verbrauch seltener/edler/kritischer Materialien, eine resultierende Grundwasserbelastung, oder Toxizität.

Zusammen bilden die Ausgangs-Designdaten und Ausgangs-Produktionsdaten sowie die Produktionsanlagendaten die Herstellungsdaten.

Ein Basiscluster ist eine Wirk-Einheit im Herstellungsprozess, bezogen sowohl auf das Design des Produktes als auch auf alle Produktionsschritte unter Berücksichtigung der Produktionsmittel, die für sich genommen einen Einfluss auf die Bewertungsgröße hat und für die diese ermittelbar ist. Das Basiscluster kann mittels des Simulationsmodells der digitalen Repräsentation ermittelt werden und ist dabei wiederum variabel, wenn sich die Datenbasis der Repräsentation verändert. Das Basiscluster kann aber auch bereits vorgegeben sein und in die Repräsentation eingebracht werden. Die Summe aller Basiscluster ergeben die Herstellungsdaten, was bedeutet, dass möglichst die Gesamtheit der Herstellungsdaten in Basiscluster zerlegt wird, um möglichst belastbare Werte für die Bewertungsgröße zu bestimmen. Daher sollte das Basiscluster eine möglichst einheitliche Wirk-Einheit sein, so zum Beispiel ein bestimmter thermischer Prozess, für den sich der Energiebedarf als Grundlage für die Bewertungsgröße bestimmen lässt. Ein anderes mögliches Basiscluster wäre beispielsweise ein Fördermechanismus einer Produktionsanlage, der sich wiederum in Materialbedarf für die Herstellung der Anlage und in den Energiebedarf beim Betrieb des Fördermechanismus zerlegen lässt. Ein Basiscluster kann aber auch so tief greifen, dass der Energiebedarf bei der Herstellung einer Maschine oder eines Werkzeuges mit einbegriffen wird. Aus diesem Beispiel ist ersichtlich, dass ein Basiscluster je nach vorhandenen Informationen noch immer weiter zerlegt werden kann. Diese weitere Detaillierung kann durch die Digitale Repräsentation kontinuierlich erfolgen, insbesondere wenn zusätzliche Informationen während des Herstellungsverfahrens eingespeist werden, die sich von den Ausgangs-Informationen unterscheiden.

Die Erfindung zeichnet sich demnach auch dadurch aus, dass mittels des Äquivalenzmodells eine Vielzahl von Daten unterschiedlichster physikalischer Größen in eine physikalische Bewertungsgröße umgerechnet werden (unter physikalischen Größen werden dabei alle technisch messbaren und evaluierbaren Größen verstanden, hierzu gehören auch chemische Größen) und somit ein Optimierungsalgorithmus auf Basis der Bewertungsgröße gestartet werden kann, der einen Zustand ermittelt, in dem die Bewertungsgröße einem vorab angegebenen Optimalwert am nächsten kommt. Dabei kann die Bewertungsgröße in einer vorteilhaften Ausgestaltung die aufgewendete Energie in kJ bedeuten oder eine Äquivalenz für eine CO₂-Emission in Gramm CO₂ sein. Die Bewertungsgröße kann sich dabei auf Äquivalente oder Normierungen dieser Größen beziehen, z.B. Energie/Stück, Energie/Zeiteinheit oder Energie/Masse. In beiden Fällen wäre der Optimalwert möglichst niedrig, nämlich Null.

Angepasste Herstellungsdaten sind die Herstellungsdaten, die mittels des Simulationsmodells und der in die digitale Repräsentation eingespeisten Herstellungsdaten und alternativen Herstellungsdaten berechnet werden und zur Herstellung eines zweiten Produktes, das bezüglich der Bewertungsgröße optimiert ist, herangezogen werden.

Der Signifikanzfaktor wird für ein Basiscluster hinsichtlich Relevanz, Signifikanz, Beeinflussbarkeit und Optimierbarkeit bzgl. des ökologischen Fußabdrucks erstellt. Wenn beispielsweise ein Basiscluster aufgrund seiner bereits erfolgten Optimierung nicht weiter mit den vorhandenen Mitteln optimierbar ist, dann wird der Signifikanzfaktor herabgesetzt. Er geht in die Berechnung alternativer Herstellungsdaten somit mit einem geringeren Gewicht ein.

Weitere vorteilhafte Ausgestaltungsformen ergeben sich aus den Unteransprüchen. Dabei ist es zweckmäßig, dass mittels des Simulationsmodells für jedes Basiscluster ein Signifikanzfaktor ermittelt wird und im Optimierungsalgorithmus die Bewertungsgröße für jedes Basiscluster mit dem Signifikanzfaktor gewichtet wird. Somit kann eine Konzentration auf die Größen gelegt werden, durch die die Bewertungsgröße am stärksten beeinflusst wird, was insbesondere Berechnungskapazitäten und auch Berechnungszeit einspart. Somit können Optimierungsergebnisse bei bestehender Rechnerkapazität schneller umgesetzt werden.

Die physikalische Bewertungsgröße ist bevorzugt die Energie oder Masse von erzeugtem Kohlendioxid. Der CO₂-Ausstoß hat den größten Einfluss auf die Ökobilanz eines Produktes und er lässt sich gut in Äquivalenz zur Energie setzen, da solange fossile Energieträger im Einsatz sind, nahezu alle verwendeten Energieformen in eine Menge von ausgestoßenem CO₂ umgerechnet werden können. Ferner kann aber jeder Herstellungsprozess, sei es zur Gewinnung von Rohstoff als auch der Betrieb von Produktionsanlagen, auf die aufgewendete Energie umgerechnet werden. Auch Rohstoffrecycling kann in die aufgewendete Energie umgerechnet werden. Somit kann auch die Größe Rohstoffnutzung in der LCA-Betrachtung in Energie und/oder CO₂ Ausstoß umgerechnet werden. Die Umrechnungsäquivalente sind hierfür im Äquivalenzmodell und somit in der digitalen Repräsentation hinterlegt.

In einer vorteilhaften Ausgestaltungsform der Erfindung gehören zu den Design-Daten, die die Konstruktion und das Design des gesamten Produktes beschreiben, auch Materialdaten. Die Frage, welches Material in dem Produkt zum Einsatz kommt, bzw. welche Alternativen es dazu gibt, trägt stark dazu bei, wie hoch der ökologische Fußabdruck des Produktes ist. Ferner lässt sich auf diesem Gebiet eine hohe Optimierungsspannbreite ausschöpfen.

Seltene Erden sind wichtige Rohstoffe, die mit einem hohen technischen und umweltbelastenden Aufwand gewonnen werden. Daher ist es zweckmäßig, zur Optimierung des Wertes der Bewertungsgröße den Einsatz dieser Materialien zu berücksichtigen und somit einen Optimierungsspielraum für das Produkt und dessen Herstellung zu erlangen.

Zweckmäßig ist es auch, wenn zur Bewertung der Basiscluster Transportschritte in der Produktion herangezogen werden. Auch der Energieeinsatz in einem Herstellungsschritt, der als Basiscluster herangezogen werden kann, ist zur Ermittlung der optimalen Bewertungsgröße zweckmäßig. Das gleiche gilt für die Betrachtung des während eines Herstellungsprozesses entstehenden Abfalls, der wiederum entsorgt oder recycelt werden muss.

Weitere Ausgestaltungsformen der Erfindung und weitere Merkmale werden anhand der folgenden Figuren beschrieben. Dabei handelt es sich lediglich um verallgemeinerte Darstellungen und spezielle Anwendungen, die keine Einschränkung des Schutzbereiches bedeuten.

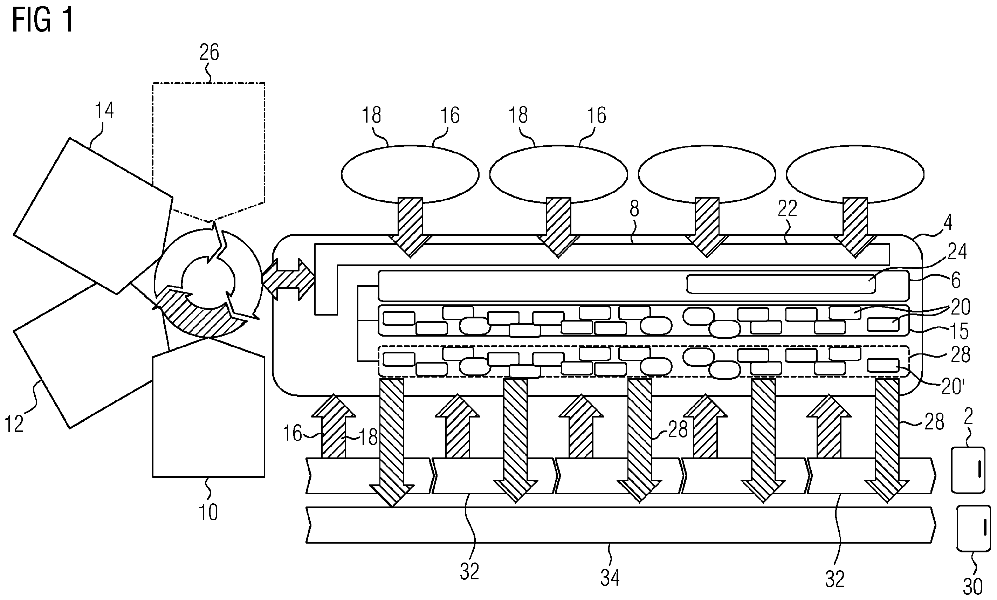

Dabei zeigt die Figur einen schematischen Ablauf des Verfahrens unter Einbeziehung einer digitalen Repräsentation.

Die Figur zeigt schematisch einen Produktionsablauf, der in einer digitalen Repräsentation 4 parallel zum realen Ablauf zur Herstellung eines Produktes 2 abgebildet ist. In die digitale Repräsentation 4, die auch als digitaler Zwilling bezeichnet werden kann, werden die bekannten Daten zu dem Produkt 2 eingespeist. Dabei handelt es sich zum einen um Ausgangs-Designdaten 10, Ausgangs-Produktionsdaten 12 und Ausgangs-Produktionsanlagendaten 14. Diese zusammen ergeben die Ausgangs-Herstellungsdaten 15.

Mit den beschriebenen Ausgangsdaten ist es bereits möglich, und nach dem Stand der Technik üblich, ein Produkt 2, das hier schematisch und exemplarisch für einen Kühlschrank stehen soll, herzustellen. Die Herstellung erfolgt in mehreren unterteilten Herstellungsschritten 32, die auch als Produktionsschritte bezeichnet werden können.

Zu den Designdaten 10 gehört grundsätzlich alles, was bei der Konstruktion eines Produktes einschließlich der Auswahl der verwendeten Materialien und Werkstoffe beispielsweise durch ein CAD-System bereitgestellt wird. Hierzu gehört nicht nur die äußere Erscheinung des endgültigen Produktes, sondern auch die Spezifikationen einzelner Teilbauteile und ihr Zusammenwirken im fertigen Produkt. Die Produktionsdaten 12 sind die Daten, die beispielsweise mit einem CAM-System erstellt werden und für die Produktion in einer beliebigen Fertigungsstätte dienen. Die Produktionsanlagendaten 14 hingegen sind die Daten, die spezifisch für die gewählte Fabrikanlage sind. D. h. sie umfassen unter anderem die tatsächlich verfügbaren Maschinen in der Werkhalle, den Lagerbestand an Produktionsmaterialien und Rohstoffen, die Verfügbarkeit von Personal zur Bedienung von entsprechenden Maschinen sowie den tatsächlichen Bedarf des Produktes auf dem Markt.

Die Aufgabe des zu beschreibenden Verfahrens besteht darin, während der laufenden Produktion eines Produktes 2 dieses kontinuierlich in Hinblick auf seinen ökologischen Fußabdruck zu optimieren. Dafür ist es zweckmäßig, aus dem Produktionsprozess und aus Fabrikdaten, wie beispielsweise den ERP-Daten, kontinuierlich alternative Produktionsdaten 16 und alternative Produktionsanlagendaten 18 in der digitalen Repräsentation 4 bereitzustellen. Ferner ist es zweckmäßig, die digitale Repräsentation 4 mit sogenannten LCA-Daten, also Life Cycle Assessment Daten, zu versehen.

Um diese Aufgabe zu lösen, werden zunächst in der digitalen Repräsentation 4 Basiscluster 20 hinterlegt, die jeweils eine möglichst kleine Wirkeinheit des gesamten Produktes und dessen Herstellung darstellen (auf Beispiele für die Basiscluster 20 wird noch eingegangen). Mit den Basisclustern 20 wird das Produkt 2 und dessen Herstellung so feinmaschig unterteilt, dass der Einfluss von den verschiedensten physikalischen Informationen, die wiederum den ökologischen Fußabdruck des Produktes 2 beeinflussen, bewertet werden kann. Hierzu wird eine physikalische Bewertungsgröße 8 bestimmt, in die alle eingebrachten physikalischen Informationen mittels eines Äquivalenzmodells 22, das Teil des Simulationsmodells 6 der digitalen Repräsentation 4 ist, umgerechnet oder überführt werden.

Diese Bewertungsgröße 8 ist in vorteilhafter Weise entweder Energie oder Masse an ausgestoßenem Kohlendioxid. Beide Größen können grundsätzlich gut ineinander umgerechnet werden, da zur Erzeugung von Energie beispielsweise Gas verbrannt wird und hierdurch wiederum Kohlendioxid mit einer bestimmten Masse pro Energieeinheit freigesetzt wird. Oder es werden die Werte des mittleren Kohlendioxid-Ausstoßes in einem nationalen Stromnetz mit einer entsprechenden Energieeinheit, wie zum Beispiel kWh, als Äquivalenz zum ausgestoßenen CO₂ gleichgesetzt.

Die physikalischen Informationen, die zu dem ökologischen Fußabdruck eines beliebigen Produktes 2 und jedes Basisclusters 20 beitragen, bestehen jedoch nicht nur aus den Größen Energie und Masse CO₂-Ausstoß. Hier kommen auch Informationen zur Toxizität, Gewässerverschmutzung oder der Rohstoffverfügbarkeit, zum Beispiel von seltenen Erden und Edelmetallen und insbesondere deren Gewinnung zum Tragen. Nun ist es allerdings möglich, diese physikalischen Informationen wiederum in die genannten Größen umzurechnen oder gleichzusetzen, wenn eine rein mathematische Umrechnung nicht möglich ist. So kann beispielsweise ein Energieaufwand ermittelt werden, der nötig ist, um ein verschmutztes Gewässer von einer toxischen Substanz zu befreien. Dies ist in der Regel technisch möglich, jedoch aufgrund eines hohen Energieaufwandes unwirtschaftlich, weshalb viele Gewässer verschmutzt bleiben. Mittels des in der digitalen Repräsentation 4 hinterlegten Äquivalenzmodells werden alle physikalischen Informationen aus den Ausgangs-Herstellungsdaten, den alternativen Produktionsdaten und den alternativen Produktionsanlagendaten sowie allen anderen der digitalen Repräsentation zugefügten Daten in die Bewertungsgröße 8 umgerechnet oder ein entsprechendes Äquivalent daraus bestimmt.

Nun steht für jedes Basiscluster 20 ein Wert für die Bewertungsgröße 8 bereit. Da die einzelnen Basiscluster 20 sehr unterschiedlich gestaltet sind und auch unterschiedliche Möglichkeiten zur Beeinflussung des ökologischen Fußabdrucks aufweisen, wird zudem bevorzugt ein Signifikanzfaktor in der digitalen Repräsentation 4 für jedes einzelne Basiscluster hinterlegt. Mit diesem Wert wird das jeweilige Basiscluster gewichtet, sodass physikalische Informationen über das Produkt, die nicht beeinflusst werden können oder die keinen Spielraum zur Optimierung aufweisen, mit einer geringeren Gewichtung in die folgenden Berechnungen eingehen. Im Weiteren werden mittels eines Optimierungsalgorithmus 24 angepasste Herstellungsdaten 28 berechnet, wobei für die Summe der Bewertungsgröße 8 für alle Basiscluster 20 eine Zielfunktion so eingestellt wird, dass sie einem vorgegebenen Präferenzwert am nächsten kommt. Dabei werden die Parameter der Ausgangs-Herstellungsdaten 15 sowie der alternativen Produktionsdaten 16 unter alternativen Produktionsanlagendaten 18 des Produktes 2 variiert.

Der Präferenzwert für die Bewertungsgröße 8 kann beispielsweise darin bestehen, dass die aufgewendete Energiemenge minimiert wird. Dabei wird sich der Optimierungsalgorithmus mit allen Variationen der zur Verfügung stehenden Informationen so verhalten, dass diejenigen Ausgangsmaterialien, Produktionsanlagen, Betriebsmittel oder diejenigen Bearbeitungsschritte für die Produktion eingesetzt werden, die letztendlich den niedrigsten Energiewert als Äquivalent für die Bewertungsgröße 8 liefern. Diese Berechnungen schließen beispielsweise auch ein, dass manche Materialien, die vom Produktdesign vorgesehen sind, mit unterschiedlichen Maschinen unterschiedlich zu arbeiten sind und alternative Materialien möglicherweise bei derselben Funktionalität einen Maschinen-, Werkzeug-, oder Betriebsmittelbedarf erlauben, der bezüglich der Bewertungsgröße 8 vorteilhafter ist. In diesem Fall würde nicht nur der Produktionsablauf für die Herstellung des Produktes verändert werden, sondern auch das Produktdesign in Form der Designdaten 10 angepasst werden. Dies führt dazu, dass durch die Berechnungen mittels des Optimierungsalgorithmus angepasste Herstellungsdaten 28 bereitgestellt werden, die sich auf das Design und die Produktion des Produktes 2 auswirken, sodass von einem anderen, zweiten Produkt 30 gesprochen werden kann, dass mittels der angepassten Herstellungsdaten 28 erstellt wird.

Betrachtet man als Produkt 2 einen Kühlschrank, so wird dieser mittels eines CAD-Systems konstruiert. Die so entstandenen Designdaten 10 umfassen die geometrische Form, die verwendeten Materialien einschließlich beispielsweise des Kühlmittels sowie alle Details über die Funktionalität insbesondere des Kühlkompressors aber auch der Innenraumgestaltung mit Ablagefächern und Beleuchtung. In einem weiteren Schritt wird mittels eines CAM-Systems die Produktion dieses Kühlschranks geplant. Hieraus entstehen die Ausgangs-Produktionsdaten 12, die insbesondere Informationen über die Umformung der Gehäuseteile sowie die Montage der Einzelbauteile und Teilprodukte umfasst. Auch diese Ausgangs-Produktionsdaten 12 werden wie die Designdaten in die digitale Repräsentation 4 eingegeben. Die digitale Repräsentation 4 ist auf eine spezielle Fertigungsstätte konzipiert, sodass auch Ausgangs-Produktionsanlagendaten 14, die für die Umsetzung der Vorgaben der Designdaten 10 und der Ausgangs-Produktionsdaten 12 wichtig sind, mit in die digitale Repräsentation 4 eingespeist werden. Diese Ausgangs-Produktionsanlagendaten 14 umfassen detaillierte Informationen zu den zur Verfügung stehenden Maschinen. Ferner enthalten sie beispielsweise Informationen über den Lagerbestand der einzelnen benötigten Materialien bzw. Teilbauteile, wie zum Beispiel den Kühlkompressor oder die Vorratsmenge des benötigten Kältemittels.

Wenn man den Begriff Basiscluster 20 auf das Beispiel eines Kühlschrankes anwendet, so kann beispielsweise das Kältemittel an sich bzw. die benötigte Menge des Kältemittels als ein Basiscluster dienen. Ein weiteres Basiscluster kann beispielsweise das benötigte Gehäusematerial für den Kühlschrank darstellen. Hier kann man unterscheiden, ob es sich um ein Aluminiumgehäuse, ein Kunststoffgehäuse (z.B. ABS) oder um ein Edelstahlgehäuse handelt. Für das Gehäusematerial ist in den Designdaten das benötigte Volumen hinterlegt, sodass beispielsweise ermittelt werden kann, welcher Energieaufwand für die Herstellung einer definierten Aluminiummenge bereitgestellt werden muss. Zusätzlich zu der reinen Energiemenge, die bei der Herstellung von Aluminium anfällt, wird als physikalische Information auch noch mit einbezogen, dass bei der Herstellung von Aluminium in vielen Fällen Umweltschäden auftreten, die energetisch aufwendig behoben werden müssen. Zudem wird der Aufwand für den Transport der Materialien bis zur Produktionsstätte und der Transport des Produktes 2 mit in die Betrachtung einbezogen. Derartige Informationen fallen auch unter den Begriff LCA-Daten.

Bei der Beurteilung des Kältemittels für den Kühlschrank wird als physikalische Information nicht nur der Energieaufwand bei der Herstellung des Mittels herangezogen, sondern zum Beispiel auch die Auswirkung des Kältemittels auf den Treibhauseffekt. Dieser wird als Global Warming Potential (GWP) bezeichnet und in Form von CO₂-Äquivalenten angegeben.

Weitere Basiscluster 20 können Herstellungsschritte 32 sein, so zum Beispiel der Umformprozess für das Gehäusematerial des Kühlschranks. Hierbei werden Werkzeuge verwendet, die hergestellt werden müssen und die bei der Herstellung wiederum einen Energiebedarf aufweisen. Ferner werden bei den Herstellungsprozessen, wie zum Beispiel der Umformung, Betriebsmittel wie Schmierstoffe eingesetzt. Auch diese Schmierstoffe weisen aufgrund ihrer Herstellung, ihrer Umweltverträglichkeit, wie beispielsweise der Toxizität oder der ökologischen Abbaubarkeit, physikalische Informationen auf, die in die Repräsentation 4 eingebracht werden.

Neben den Werkzeugen und den Betriebsmitteln und dem Transport zwischen den einzelnen Produktionsplätzen können die einzelnen verwendeten Maschinen auch jeweils Basiscluster darstellen. Auch Maschinen können in ihrer Herstellung und in ihrem Betrieb unterschiedliche ökologische Belastungen darstellen, die wiederum in physikalische Informationen münden, die der digitalen Repräsentation 4 zugeführt werden.

Die in die digitale Repräsentation 4 eingespeisten physikalischen Informationen sind wie bereits definiert physikalische oder chemische Größen, die nicht unbedingt in derselben physikalischen Größe vorliegen wie die Bewertungsgröße 8. Die Bewertungsgröße 8 wird in einer vorteilhaften Ausgestaltung als Energie oder Masse an ausgestoßenem Kohlendioxid dargestellt. In dem Äquivalenzmodell 22 sind dabei Umrechnungsalgorithmen oder auch Definitionen für den Vergleich verschiedener Größen hinterlegt, sodass schließlich alle physikalischen Informationen in der verwendeten Größe und Einheit der Bewertungsgröße 8 vorliegen.

So kann beispielsweise das GWP des Kältemittels mit einem Äquivalent für den Ausstoß an Masse Kohlendioxid belegt sein, das auf wissenschaftlichen Experimenten, wie beispielsweise die Reflexion von Infrarotstrahlen in einem Trägergas, basiert. Wenn sich nun herausstellt, dass ein Kältemittel A nach den wissenschaftlich festgelegten Methoden einen zehnfachen GWP des Kohlendioxids aufweist und ein Kältemittel B lediglich einen zweifachen GWP aufweist, so kann dies in die Berechnung des ökologischen Fußabdrucks des Produktes 2 einfließen. Es kann aber sein, dass bei der Herstellung des Kältemittels B mit dem besseren GWP wesentlich mehr Energie aufgewendet werden muss als bei dem Kältemittel A. Dann ist es zweckmäßig, die Masse an ausgestoßenem Kohlendioxid wiederum in Energie umzurechnen. Hierfür kann beispielsweise im Äquivalenzmodell 22 ein Wert hinterlegt sein, der den CO₂-Ausstoß bei der Stromerzeugung an dem Ort enthält, an dem die Kältemittel hergestellt werden. Dieser Wert kann bei zeitlichen Änderungen auch variiert werden und kontinuierlich neu in die digitale Repräsentation eingestellt werden. Auf diese Weise können sich die Voraussetzungen für die Produktion des Produktes 2 während der Produktion kontinuierlich verändern.

Diese kontinuierlichen Veränderungen im Produktions- und Herstellungsumfeld betreffen nicht nur Energiewerte zur Erzeugung eines Kältemittels, sondern es gehen auch Informationen über die tatsächliche Produktion in die digitale Repräsentation 4 ein. So können beispielsweise während der realen Produktion Erkenntnisse darüber entstehen, wie sich das Produkt 2 tatsächlich herstellen lässt. Hierbei sind zum Beispiel Ausschussquoten in bestimmten Herstellungsschritten 32 oder tatsächliche Energieverbräuche mit den jeweils eingesetzten Maschinen in diesen Produktionsschritten 32 einbezogen. Bei diesen Informationen handelt es sich um alternative Produktionsdaten 16 bzw. alternative Produktionsanlagendaten 18.

Der digitalen Repräsentation 4 liegen also Ausgangs-Herstellungsdaten 15 zur Herstellung des Produktes 2 vor, wobei bereits zu Beginn und im Laufe der Produktion des Produkts 2 alternative Produktionsdaten 16 und alternative Produktionsanlagendaten 18 hinzukommen. In der digitalen Repräsentation 4 sind zudem die Basiscluster 20 hinterlegt, die während der Produktion auch durch das Simulationsmodell 6 mittels einer darin enthaltenen, auf sinnvolle Wirkeinheiten trainierten künstlichen Intelligenz variiert und verfeinert werden können. Das Anlegen und Bestimmen der Basiscluster 20 ist somit ebenfalls ein kontinuierlicher Prozess, der sich während des Produktionszeitraums verändern kann.

Da sich die Basiscluster 20 bezüglich des ökologischen Fußabdrucks aufgrund ihrer Beeinflussbarkeit, möglichen Alternativen oder ganz allgemein ihrer absoluten Größe unterscheiden, ist es zweckmäßig, einen Signifikanzfaktor für jedes Basiscluster zu erstellen. Dieser Signifikanzfaktor ist ebenfalls in der digitalen Repräsentation hinterlegt und wird entweder im Voraus festgelegt oder mittels des Simulationsmodells und zugehöriger Daten errechnet.

Am Beispiel des Kältemittels für den Kühlschrank kann verdeutlicht werden, dass dieses Kältemittel aufgrund seines unterschiedlichen GWP einen relativ großen Einfluss auf die gesamte Betrachtung des ökologischen Fußabdrucks des Produktes haben kann. Zudem gibt es in der Regel auch Alternativen für ein bestimmtes Kältemittel oder auch für ein bestimmtes Betriebsmittel wie Schmierstoffe. Im Fall des Kältemittels wäre aufgrund der Relevanz und der zur Verfügung stehenden Alternativen der Signifikanzfaktor vergleichsweise hoch. Das gleiche gilt auch für das Material, das für das Gehäuse des Kühlschranks verwendet wird, da auch hier sowohl Alternativen als auch erhebliche Unterschiede in der Bewertungsgröße 8 vorliegen können. Das Gewicht des gesamten Kühlschrankes könnte möglicherweise eine geringere Signifikanz aufweisen, da es zwar grundsätzlich beim Transport in die Gesamtbilanz des ökologischen Fußabdrucks, also auch in die Summe aller Bewertungsgrößen mit eingeht, dieses aber verglichen mit anderen Basisclustern eine geringere Auswirkung hat.

Der Signifikanzfaktor ist für jedes Basiscluster 20 bevorzugt ebenfalls in der digitalen Repräsentation 4 hinterlegt und wird zur Gewichtung der für jedes Basiscluster 20 ermittelten Bewertungsgröße 8 herangezogen. Mittels des Optimierungsalgorithmus 24, der bevorzugt Teil des Simulationsmodells 6 der digitalen Repräsentation 4 ist, und einer darin enthaltenen Zielfunktion wird nun die Summe der Bewertungsgrößen 8 der einzelnen Basiscluster 20 berechnet. Dies erfolgt unter Verwendung aller zur Verfügung stehenden Daten, insbesondere der Ausgangs-Herstellungsdaten und der alternativen Herstellungsdaten sowie bevorzugt der LCA-Daten, sodass die Zielfunktion einem vorgegebenen Präferenzwert am nächsten kommt. Dieser Präferenzwert ist bei der Festlegung der Größe Energie für die Bewertungsgröße 8 ein möglichst geringer Wert, der im Idealfall 0 beträgt.

Hierbei werden wie beschrieben die Ausgangs-Herstellungsdaten 15 sowie die alternativen Produktionsdaten 16 und die alternativen Produktionsanlagendaten 18 variiert, wobei unter der genannten Prämisse der Minimierung der Bewertungsgröße 8 angepasste Herstellungsdaten 28 berechnet werden. Diese angepassten Herstellungsdaten 28 können auch angepasste Basiscluster 20' umfassen. Die angepassten Herstellungsdaten werden nun herangezogen, um angepasste Produktionsschritte 34 zu realisieren. Grundsätzlich können diese auch dazu dienen, die Ausgangs-Designdaten 10 des Produktes zu verändern. Auf diese Weise wird nun ein zweites Produkt 30 mittels der angepassten Produktionsschritte 34 hergestellt.

Bei dem Produkt 2 und dem angepassten Produkt 30 in Form eines Kühlschrankes wird hier lediglich beispielhaft ein Kühlschrank beschrieben, da dieser anschaulich als Produkt darstellbar ist. Das beschriebene Verfahren lässt sich daher auch auf eine Vielzahl der unterschiedlichsten Produkte anwenden. So kann ein Automobil in seiner Gesamtheit mittels des vorher beschriebenen Verfahrens produziert werden. Insbesondere in der Automobiltechnik kommen sehr viele unterschiedliche Produktionsschritte zur Anwendung, die einer entsprechenden Betrachtung unterzogen werden können. Insbesondere auch das Design eines Fahrzeuges hat einen sehr hohen Anteil an der gesamten Bewertung seines ökologischen Fußabdrucks. Auch Massenprodukte und Wegwerfartikel können unter Berücksichtigung des beschriebenen Verfahrens bezüglich ihres ökologischen Fußabdrucks optimiert werden. Hier seien beispielsweise Plastiktüten, Einwegverpackungen oder Einmalbesteck genannt.

Das beschriebene Verfahren und der darin enthaltene Regelkreis weisen folgende Vorteile gegenüber herkömmlichen Verfahren auf:
- Ein wichtiger Vorteil des beschriebenen Optimierungsverfahrens für die Herstellung eines Produktes 2 liegt darin, dass mit fortschreitender Nutzungsdauer die Berechnungsergebnisse stetig besser werden, was zu einer kontinuierlichen Optimierung sowohl des Verfahrens und des Ökosystems an sich als auch der Nachhaltigkeitsindizes der konkret betrachteten Produkte führt.
- Ein wichtiger Beitrag hierzu liegt in der Umrechnung aller vorhandenen Informationen und Einflussgrößen in eine Bewertungsgröße mit einer physikalischen Einheit, die bezüglich eines einzigen Zielwertes, also des Präferenzwertes, rechnerisch optimiert wird. Die Nutzung eines standardisierten Äquivalenzwertes als Umwelteinfluss (wie z.B. "Embedded Energy") stellt also eine Vergleichbarkeit der Ergebnisse sicher.
- Ein sich im Verlauf des Produktdesign-Prozesses (CAD/CAM) ergebendes "Overengineering" kann gezielt abgemildert werden, ohne dabei USPs oder KPIs des Produktes zu korrumpieren. Es kann also beispielsweise als Ergebnis der Optimierungsberechnung eine Materialeinsparung beim Produkt selbst oder bei Betriebsmitteln in der Herstellung erfolgen.
- Somit kann nicht nur der ökologische Fußabdruck des Produktes verbessert werden, sondern auch dessen gesamte Wertschöpfung und Kostenstruktur, und somit können neue/größere Wettbewerbsvorteile geschaffen werden.
- Verbesserungs- bzw. Problemlösungsmaßnahmen können zeitnah umgesetzt werden, da sämtliche zur Verfügung stehenden Informationen automatisiert aggregiert, verknüpft und evaluiert werden.
- Die Nachhaltigkeits-Datenbank der Produktion wird um ein lernendes und selbstoptimierendes System (Machine Learning, Künstliche Intelligenz KI) ergänzt, das auch in bereits etablierten Produktionen noch wertvollen Input für optimierte Produktdesigns oder sinnvolle Maßnahmen zur Verbesserung des Nachhaltigkeitsfaktors von Bauteilen/ Produkten liefern kann. Das heißt, das beschriebene Verfahren einschließlich der digitalen Repräsentation kann in bestehende Produktionsabläufe integriert werden.

### Bezugszeichenliste

- 2: Produkt
- 4: digitale Repräsentation
- 6: Simulationsmodell
- 8: Bewerbungsgröße
- 10: Ausgans-Designdaten
- 12: Ausgangs-Produktionsdaten
- 14: Ausgangs-Produktionsanlagendaten
- 15: Ausgangs-Herstellungsdaten
- 16: alternative Produktionsdaten
- 18: alternative Produktionsanlagendaten
- 20: Basiscluster
- 22: Äquivalentsmodell
- 24: Optimierungsalgorithmus
- 26: LCA-Daten
- 28: angepasste Herstellungsdaten
- 30: zweite Produkt
- 32: Herstellungsschritte
- 34: angepasste Produktionsschritte

## Patentansprüche

1. Verfahren zur Herstellung eines Produktes (2) umfassend folgende Schritte:
- Erstellen einer digitalen Repräsentation (4) des Produktes (2) umfassend mindestens ein Simulationsmodell (6),
- Festlegen einer physikalischen Bewertungsgröße (8),
- Einbringen von Ausgangs-Designdaten (10) und Ausgangs-Produktionsdaten (12) des Produktes sowie Ausgangs-Produktionsanlagendaten (14), die zusammen die Ausgangs-Herstellungsdaten (15) bilden, in die digitale Repräsentation (4),
- Einspeisen von Life Cycle Assessment-Daten (LCA) (26) des Produktes (2) in die digitale Repräsentation (4)
- Einbringen von weiteren, alternativen Produktionsdaten (16) und/oder alternativen Produktionsanlagendaten (18) in die Repräsentation (4),
- Bereitstellen von Basisclustern (20) aus einzelnen Herstellungsdaten, wobei die Summe aller Basiscluster (20) die Herstellungsdaten (15) ergibt,
wobei das Basiscluster eine Wirk-Einheit im Herstellungsprozess, bezogen sowohl auf das Design des Produktes als auch auf alle Produktionsschritte unter Berücksichtigung der Produktionsmittel, ist, die für sich genommen einen Einfluss auf die Bewertungsgröße hat, und für die diese ermittelbar ist,
- Berechnung eines Wertes der Bewertungsgröße (8) für jedes Basiscluster (20), wobei physikalische Informationen der Herstellungsdaten (15) anhand eines in der Repräsentation (4) abgelegten Äquivalenzmodells (22) in die Bewertungsgröße (8) umgerechnet werden,
- mittels des Simulationsmodells (6) für jedes Basiscluster (20) ein Signifikanzfaktor ermittelt wird und im Optimierungsalgorithmus (24) die Bewertungsgröße (8) für jedes Basiscluster (20) mit dem Signifikanzfaktor gewichtet wird
- Berechnung von angepassten Herstellungsdaten (28) mittels des Simulationsmodells (6), das einen Optimierungsalgorithmus (24) umfasst, mit dem die Summe der Bewertungsgrößen (8) für alle Basiscluster (20) als Zielfunktion so eingestellt wird, dass sie einem vorgegebenen Präferenzwert am nächsten kommt, wobei als Parameter die Herstellungsdaten (15), die alternativen Produktionsdaten (16) und die alternativen Produktionsanlagendaten (18) des Produktes (2) variiert werden, wobei die Life Cycle Assessment-Daten zur Berechnung der angepassten Herstellungsdaten (28) herangezogen werden.
- Herstellung eines zweiten Produktes (30) unter Verwendung der angepassten Herstellungsdaten (28), das bezüglich der Bewertungsgröße optimiert ist

2. Verfahren nach Anspruch 1, **dadurch gekennzeichnet, dass** die physikalische Bewertungsgröße (8) Energie oder Masse von erzeugtem Kohlendioxid ist.

3. Verfahren nach einem der vorhergehenden Ansprüche, wobei die Designdaten (10) Materialdaten umfassen.

4. Verfahren nach Anspruch 1, bei dem für ein Basiscluster (20) ein Materialeinsatz in einem Herstellungsschritt (32) verwendet wird, insbesondere ein Einsatz von seltenen Erden oder Edelmetallen.

5. Verfahren nach Anspruch 1, bei dem als Basiscluster (20) ein Transportschritt für das Produkt (2) oder Teile des Produkts (2) verwendet wird.

6. Verfahren nach Anspruch 1, bei dem als Basiscluster (20) ein Energieeinsatz in einem Herstellungsschritt (32) verwendet wird.

7. Verfahren nach Anspruch 1, bei dem als Basiscluster eine Abfallerzeugung in einem Herstellungsschritt (32) verwendet wird.

## Claims

1. Method for manufacturing a product (2), comprising the following steps:
- creating a digital representation (4) of the product (2), comprising at least one simulation model (6),
- defining a physical evaluation variable (8),
- introducing initial design data (10) and initial manufacturing-process data (12) of the product and initial manufacturing-plant data (14), which together form the initial manufacturing data (15), into the digital representation (4),
- feeding Life Cycle Assessment data (LCA) (26) of the product (2) into the digital representation (4),
- introducing further, alternative manufacturing-process data (16) and/or alternative manufacturing-plant data (18) into the representation (4),
- providing basic clusters (20) from individual items of manufacturing data, wherein the sum of all basic clusters (20) yields the manufacturing data (15),
wherein the basic cluster is a functional unit in the manufacturing process, in terms of both the design of the product and all manufacturing steps, taking into account the means of manufacturing, which, taken in isolation, has an influence on the evaluation variable, and for which the variable can be determined,
- calculating a value of the evaluation variable (8) for each basic cluster (20), wherein physical information of the manufacturing data (15) is converted into the evaluation variable (8) on the basis of an equivalence model (22) stored in the representation (4),
- determining, by means of the simulation model (6), a significance factor for each basic cluster (20), and weighting, in the optimization algorithm (24), the evaluation variable (8) for each basic cluster (20) with the significance factor,
- calculating adjusted manufacturing data (28) by means of the simulation model (6), which comprises an optimization algorithm (24) with which the sum of the evaluation variables (8) for all basic clusters (20) as an objective function is adjusted such that it most closely matches a predefined preference value,
wherein the manufacturing data (15), the alternative manufacturing-process data (16) and the alternative manufacturing-plant data (18) of the product (2) are varied as parameters, wherein the Life Cycle Assessment data are used to calculate the adjusted manufacturing data (28),
- manufacturing a second product (30) using the adjusted manufacturing data (28), the second product being optimized with respect to the evaluation variable.

2. Method according to claim 1, **characterized in that** the physical evaluation variable (8) is energy or mass of carbon dioxide generated.

3. Method according to any one of the preceding claims, wherein the design data (10) comprise material data.

4. Method according to claim 1, in which a material input in a manufacturing step (32), in particular a use of rare earths or precious metals, is used for a basic cluster (20).

5. Method according to claim 1, in which a transport step for the product (2) or parts of the product (2) is used as a basic cluster (20).

6. Method according to claim 1, in which an energy input in a manufacturing step (32) is used as a basic cluster (20).

7. Method according to claim 1, in which waste generation in a manufacturing step (32) is used as a basic cluster.

## Revendications

1. Procédé de fabrication d'un produit (2), comprenant les étapes suivantes consistant à :
- créer une représentation numérique (4) du produit (2) comprenant au moins un modèle de simulation (6),
- définir une variable d'évaluation physique (8),
- introduire des données de conception de sortie (10) et des données de production de sortie (12) du produit ainsi que des données d'installation de production de sortie (14), qui forment ensemble les données de fabrication de sortie (15) dans la représentation numérique (4),
- introduire des données d'analyse de cycle de vie (LCA) (26) du produit (2) dans la représentation numérique (4),
- introduire des données de production alternatives (16) et/ou données d'installation de production alternatives (18) supplémentaires dans la représentation (4),
- mettre à disposition des groupes de base (20) à partir de données de fabrication individuelles, dans lequel la somme de tous les groupes de base (20) aboutit aux données de fabrication (15),
dans lequel le groupe de base est une unité active dans le processus de fabrication, en ce qui concerne à la fois la conception du produit et toutes les étapes de production en tenant compte des moyens de production, qui a en soi une influence sur la variable d'évaluation et pour laquelle celle-ci peut être déterminée,
- calculer une valeur de la variable d'évaluation (8) pour chaque groupe de base (20), dans lequel les informations physiques des données de fabrication (15) sont converties en la variable d'évaluation (8) à l'aide d'un modèle d'équivalence (22) stocké dans la représentation (4),
- déterminer un facteur de signification à l'aide du modèle de simulation (6) pour chaque groupe de base (20) et dans l'algorithme d'optimisation (24), la variable d'évaluation (8) pour chaque groupe de base (20) est pondérée par le facteur de signification,
- calculer des données de fabrication ajustées (28) à l'aide du modèle de simulation (6), qui comprend un algorithme d'optimisation (24) permettant de définir la somme des valeurs d'évaluation (8) pour tous les groupes de base (20) en tant que fonction cible de manière à ce qu'elle se rapproche le plus d'une valeur de préférence prédéterminée,
dans lequel les données de fabrication (15), les données de production alternatives (16) et les données d'installation de production alternatives (18) du produit (2) sont modifiées en tant que paramètres, dans lequel les données d'analyse de cycle de vie sont utilisées pour calculer les données de fabrication ajustées (28).
- fabriquer un second produit (30) en utilisant les données de fabrication ajustées (28) optimisées en termes de variable d'évaluation.

2. Procédé selon la revendication 1, **caractérisé en ce que** la variable d'évaluation physique (8) est l'énergie ou la masse de dioxyde de carbone généré.

3. Procédé selon l'une quelconque des revendications précédentes, dans lequel les données de conception (10) comprennent des données de matériau.

4. Procédé selon la revendication 1, dans lequel une quantité de matériau est utilisée dans une étape de fabrication (32) pour un groupe de base (20), en particulier une quantité de terres rares ou de métaux précieux.

5. Procédé selon la revendication 1, dans lequel une étape de transport est utilisée pour le produit (2) ou des parties du produit (2) en tant que groupe de base (20).

6. Procédé selon la revendication 1, dans lequel une quantité d'énergie est utilisée comme groupe de base (20) dans une étape de fabrication (32).

7. Procédé selon la revendication 1, dans lequel une génération de déchets est utilisée comme groupe de base dans une étape de fabrication (32).
